# EUROPEAN PATENT APPLICATION

(11) **EP 2 672 749 A1**
(43) Date of publication of application: **11.12.2013**
(21) Application number: 12171250.9
(22) Date of filing: 08.06.2012
(51) Int. Cl.: H04W 24/02

(54) **Self-organising network**

(71) Applicant: Telefonaktiebolaget L M Ericsson AB (Publ), 164 83 Stockholm (SE)
(72) Inventor: Ràcz, András, H-1148 Budapest (HU); Reider, Norbert, H-9111 Tényö (HU)
(74) Representative: Somervell, Thomas Richard

(57) **Abstract**

A method of operating a cellular telecommunications network to implement a self-organising network, SON, functionality is presented. A network manager, NM, SON function is implemented in a network manager, NM, and a plurality of network elements, NEs, each has a NE SON function implemented therein. Each NE SON function is associated with one or more network cells. The method comprises the NM SON function obtaining operational data relating to the network and evaluating a current network condition based on the operational data. Based on the current network condition, the NM SON function determines an allowable set of configuration parameters and conditional actions. The allowable set defines combinations of cell configuration parameters that a NE SON function is permitted to use when reconfiguring an associated cell. The NM SON function provides the allowable set in a NE configuration attribute sent to the NE SON function. The conditional actions are configured in the NE SON function and ensure the consistency and integrity of decisions taken at individual cells.

## Description

### Technical Field

The present invention relates to the use of a self-organising network (SON) functionality in a cellular mobile telecommunications network.

### Background

Self-Organizing Networks (SONs) provide functionality that enables network reconfigurations and optimizations to be executed autonomously. The SON concept can play an important role in the effort to reduce costs associated with network management and optimization.

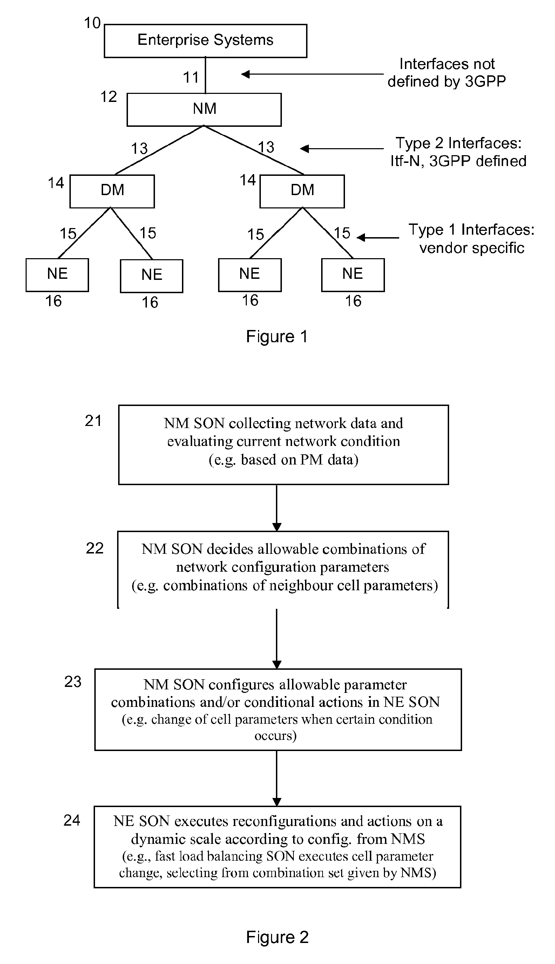

The 3^{rd} Generation Partnership Project (3GPP) specifies the architecture and procedures that enable cellular systems to employ different technologies and standards - for example, Long Term Evolution (LTE) and Wideband Code Division Multiple Access (WCDMA) radio access systems. In these cellular networks, the operation and maintenance functions are receiving more and more attention as they significantly contribute to operator's cost. The 3GPP standards also specify the corresponding management architecture of a network system that concurrently employs different technologies such as WCDMA and LTE. The logical management architecture for 3GPP systems is shown in Figure 1.

Enterprise systems 10 are those parts of the network operated by individual enterprises (e.g. service providers). These communicate with a network manager (NM) 12 via interfaces 11 that are not defined in the 3GPP standards. Node elements (NEs) 16 are network entities located in the cells, for example Radio Access network (RAN) nodes that provide a radio interface in the mobile network, such as eNodeBs in the case of a LTE network or a NodeB or Radio Network Controller (RNC) in the case of WCDMA. Each NE operates in association with one or more associated cells. The NEs 16 are managed by a domain manager (DM) 14, also called an Operation and Support System (OSS). Communications between the DM 14 and each NE 16 is via a proprietary "Type-1" interface 15. Communications between each DM 14 and the NM 12 is via a "Type-2" or Itf-N interface 13, which is specified by 3GPP and includes support for functionalities such as Performance Management (PM), Configuration Management, Alarms, Tracing, MDT (Minimization of Drive Test) measurements, etc. These standard functions provided over the Itf-N interface 13 enable the NM 12 to manage different domains (i.e., RAN and core network domains) as well as multiple technologies (e.g., WCDMA, LTE) in a multi-vendor environment - i.e. where the different domains utilise different technologies provided by different vendors.

SON functionality can be deployed in different parts of the network, including the NEs 16 as well as the management system (DM 14, NM 12). As used herein, the expression SON function refers to the implemented SON functionality in a network entity - i.e. NM SON function is the (total) SON functionality implemented (i.e. programmed) in a NM entity. A parameter is a single configurable or settable variable of a particular cell or network entity (e.g. antenna tilt, or frequency band used in a cell). An attribute is a message, or set of instructions, that the NM sends over the Itf-N interface towards the NEs, and defines how the parameters (e.g., tilt or used frequency band) have to be adjusted when an operating NE SON function determines that a parameter (e.g. antenna tilt value) should be changed. The SON functions vary depending on their target parameter set and the type of configuration or optimisation that they execute. SON functions may operate over widely differing time scales (e.g., ranging from seconds/minutes for some functions to hours/days for others). For example, SON functions that require fast operation and/or deal with individual per-user actions are typically deployed in NEs 16 close to the radio interface. Other functions that operate over a longer time scale and deal with cell-level optimizations can be deployed higher up in the management system (e.g. in the NM 12).

Depending on the type of SON function, this may operate autonomously at a single NE 16, or in a single cell. However, other types of SON function require interaction between two or more NEs 16, for instance where cooperation with neighbouring cells is required. This may be achieved with use of the network signalling interfaces (e.g. the X2 interface between eNodeBs). The standard specifies specific signalling messages to be used over the X2 interface, for instance to support handover parameter optimization or load balancing SON functions executed in eNodeBs.

SON functions deployed in NEs can implement fast and dynamic actions in response to changes in network conditions, such as conditions in local cells. However a problem arises when negotiations are required between neighbouring cells for making a multi-cell optimized decision, due to the amount of signalling required. Another problem that arises with the management system SON is that it does not have the ability to implement actions quickly in response to changes in individual user or local NE or cell conditions.

There are a number of SON functions that would be improved if they could act on a short time scale based on the actual situation in the network but where the action requires coordination with neighbour cells in order to maintain network integrity. One example is changing cell size for improved load sharing, while another example is changing cell coverage for improved energy efficiency.

In all these cases the action needs to be made on a fast time scale, which is not possible with a management system-based SON function, while at the same time requiring close coordination between neighbouring cells, which is difficult to realize in a NE-based SON function. Currently SON functions are usually set up with fast and local cell functions deployed in the NE, while long time-scale and multi-cell functions are deployed in the management system, and there is little or no coordination between the two.

There is thus a need for an improved method of implementing SON functions that alleviate the problems referred to above.

### Summary

A first aspect provides a method of operating a cellular telecommunications network to implement a self-organising network, SON, functionality. A network manager, NM, SON function is implemented in a network manager, NM, and a plurality of network elements, NEs, each has a NE SON function implemented therein. Each NE SON function is associated with one or more network cells. The method comprises the NM SON function obtaining operational data relating to the network and evaluating a current network condition based on the operational data. Based on the current network condition, the NM SON function determines an allowable set of configuration parameters. The allowable set defines combinations of cell configuration parameters that a NE SON function is permitted to use when reconfiguring an associated cell. The NM SON function provides the allowable set in a NE configuration attribute sent to the NE SON function.

A second aspect provides a method of operating a cellular telecommunications network to implement a self-organising network, SON, functionality. A network manager, NM, SON function implemented in a network manager, NM, and a plurality of network node element, NE, SON functions each has a NE SON function implemented therein. Each NE SON function is associated with one or more network cells. The method comprises a NE SON function receiving from the NM SON function an NE configuration attribute defining combinations of cell configuration parameters that the NE SON function is permitted to use when reconfiguring an associated cell. The NE SON function monitors network conditions that relate to the associated cell and, in response to changes in the monitored network conditions, reconfigures the associated cell using cell configuration parameters in accordance with the received configuration attribute.

Exemplary embodiments include an NE configuration attribute that defines a set of antenna tilt values to be used depending on whether one or more neighbouring cells are active or inactive; an NE configuration attribute that includes an instruction for the NE to set a frequency domain resource allocation parameter to a specified frequency band when the NE detects interference from neighbouring cells; and an NE configuration attribute that defines values of a load-dependent antenna tilt parameter that the NE can use depending on values of antenna tilt parameters being used in neighbouring cells.

It is an advantage that the benefits of distributed and centralised SON functions are combined by enabling a closer inter-working between the two. The inter-working is achieved by the NM SON function configuring allowable combinations of parameters, which can be selected by the NE SON functions. The allowable combinations may include combinations of parameters in two or more neighbouring cells. In addition the NM SON function may configure conditional and inter-cell harmonized actions, which actions are executed by the NE SON functions depending on the instantaneous network situation. These actions are implemented by attributes sent from the NM SON to the NEs.

It is a further advantage that the configuration of parameter combinations and conditional actions by the NM SON function can be done in harmony with the parameter combinations and actions configured in neighbouring cells, thereby ensuring multi-cell and network wide integrity of the instantaneous actions taken by the NE SON functions.

A further advantage of the solution is that the centralised and distributed SON functions are merged in such a way that no real-time interaction is needed between the NE SON and NM SON functions. The interaction between the two is kept on the configuration level and time scale. In other words, when an NE SON function is about to change a cell parameter (e.g. change the antenna tilt of the cell), it does not need to start negotiating the exact value of the parameter change with the NM SON, because the possible values are already configured in the NE SON. However, the setting and updating of the set of allowable parameter combinations for the NE SON functions is no longer tied to the task of changing the parameter and can be executed over a longer time scale (e.g. on a time scale of minutes) or whenever the NM SON has enough knowledge to calculate the new parameter combinations - i.e. the interaction between the NM and NE SON functions does not need to be in real time.

### Brief Description of the Drawings

Figure 1 is a schematic diagram showing the logical management architecture of a 3GPP-defined network.
Figure 2 is a flow diagram of an embodiment illustrating the sequence of steps in a method.
Figure 3 is a schematic illustration of an embodiment showing the information flows between network elements.
Figure 4 is a block diagram showing the principal functional components of a network manager.
Figure 5 is a block diagram showing the principal functional components of a network entity.

### Detailed Description

In the embodiments to be described below a Network Manager (NM) is configured to perform a Self-Organising Network (SON) function - hereafter referred to as the NM SON function. Node Elements (NEs) are also configured to perform SON functions, hereafter referred to as NE SON functions. It will be understood that both the NM SON function and the NE SON functions are configured in their respective network entities in the form of software executable by a processor in the entity hardware. The main steps in the method are set out in the flow diagram of Figure 2.

Step 21 involves the NM SON collecting data from the network and evaluating a current condition of the network. The data may be, for example, performance management (PM) data such as signal strength measurements of a cell and of the neighbouring cells, as well as traffic data or other network performance indicators. Note that the data collected may depend on the particular SON function(s) being implemented. For example, a SON function that implements tuning of cell antenna tilt angles may collect data related to antenna tilt angles, antenna height, antenna type, site location, etc for each cell. The NM then evaluates the data collected to analyse any significant changes in the network, such as performance changes, to determine the current condition of the network. For example, the data collected by the NM may indicate patterns of network usage, with some cells having heavy traffic while others have less traffic. The data could also provide an indication of current cell coverage areas. The NM can then analyse this information to obtain a view of the current operating conditions across all the cells of the network.

At step 22, the NM SON function determines a set of allowable combinations of cell and/or NE SON parameters, based on the determined current condition of the network. The NM SON function identifies optimal combinations of configuration parameters for the current conditions of the network in different situations. The NM SON can make use of a large amount of collected measurement data including PM (Performance Management) statistics, as well as expert data and a-priori knowledge that may be available in the management system, to determine the set of allowable parameter combinations.

The allowable combinations may include combinations of parameters of the NE itself, parameters of the cell or cells in which the NE resides or is primarily responsible for, and parameters of neighbouring cells. The allowable combinations may include conditional combinations, whereby, for example, if a given parameter p_x is set to value v1 in cell A, then the same parameter p_x (or some other parameter p_y) needs to be set to value v2 in neighbouring cell B in order to ensure integrity across cells. The NM SON can also utilise experience gained from previous reconfigurations, based on performance measurements done before and after the reconfigurations, and feedback from NE SONs in order to derive new combinations or to fine tune existing combinations of parameter settings.

In addition to the set of allowable combinations, the NM SON may include specific instructions whereby a certain NE or cell parameter is to be changed when certain conditions occur in a cell. Note that the NM SON also ensures that the correct actions are configured in the NE SON functions of neighbouring cells such that the actions are in harmony and consistent with each other.

At step 23 the NM SON provides the set of allowable parameter combinations to the NE SON functions. This step involves the NE SON functions being re-configured so that they utilise, and comply with, the newly provided allowable set. The re-configured NE SON functions may be conditional - i.e. in the form of "*IF condition THEN action*", where the action part would typically include a cell reconfiguration action executed by the NE SON function. These actions and conditional actions are provided by the NM SON function to the NEs for implementation in the NE SON functions by the sending of an attribute. Some specific examples are given below.

The NE SON function can perform its own algorithms and make its own decision, which allows it to operate at a fast time scale, and allows the possibility for it to perform actions based on information about an individual user entity (UE) accessing the network. However, the NE SON decisions have to comply with the allowable set as specified by the NM SON. Keeping the reconfiguration actions within the specified set of allowable parameter combinations ensures the consistency and integrity of decisions taken at individual cells.

At step 24 the NE SON functions then perform their actions (e.g. reconfiguring the NE or cell hardware etc.) dynamically at the local level, and at a fast time scale, based on actual cell conditions. However, the NE SON functions are restricted in that they can only select configuration parameters from the allowable set specified by the NM SON function. In this way it is possible to make use of the fast and dynamic reactions of NE SON functions, while ensuring that the actions remain consistent across neighbouring cells. The burden of carrying out negotiations between the cells is removed from the NE SON function.

An example of the application of the method described above is in the setting of different combinations of antenna tilt parameters of neighbouring cells, based on the intended coverage areas of the cells. The coverage area of one cell can be decreased in exchange for increasing the coverage area of a neighbouring cell. However, the coverage area increase in the neighbouring cell has to match accurately enough with the coverage decrease in the first cell in order to avoid both the creation of coverage holes and excessive interference. Determining allowable combinations of neighbouring cell antenna tilt configurations is best performed by the management system (NM) where different sources of data are available, and where a multi-cell view of the network can be taken. For example, the management system can consider collected signal strength measurement statistics, as well as cell planning data to select combinations of antenna tilt parameters in the different cells. Cell planning data includes information that is used by cell planning tools for optimisation of the network and may include, for example, the antenna gain of the base stations, the frequency band being used.

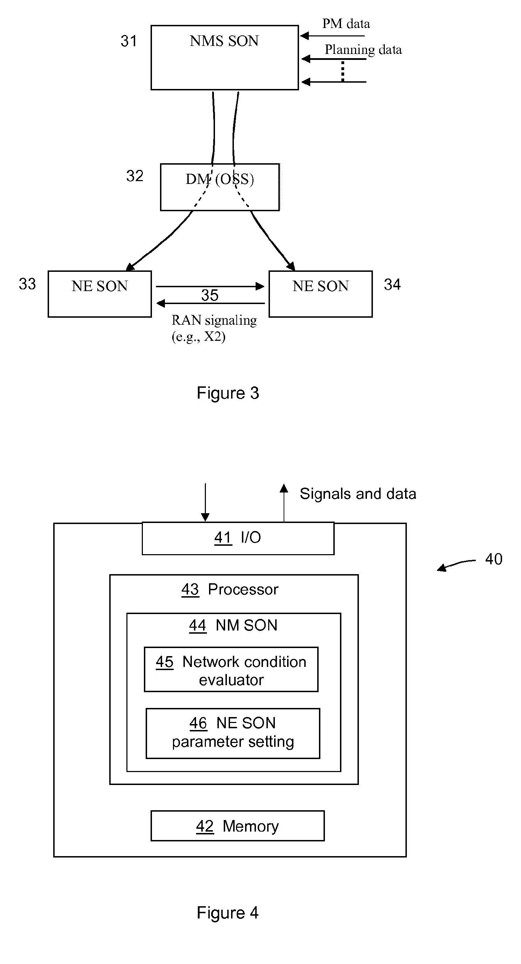

Figure 3 is a simplified schematic illustration showing how the method described above is implemented in the network architecture. As shown the entities include a NM SON entity 31, a Domain Manager (DM) entity 32 and a representative two NE SON entities 33, 34, in the domain managed by DM entity 32. NM SON entity 31 receives data from the network, such as PM data, planning data etc. as described above. The NM SON entity 31 evaluates the data to determine the current network condition and issues the allowable set, comprising parameter combinations and/or conditional NE SON actions, for each of the NE SON entities 33, 34 over a Type 2, Itf-N, interface 35 to the DM 32. The DM 32 distributes the allowable sets to the NE SON entities 33, 34.

During execution of the NE SON function, decisions for reconfiguration are made by the NE SON function. However, the neighboring NEs may also need to be notified about this reconfiguration, so that in response to the notification, the neighboring NE SON functions can take corresponding actions if mandated to do so by the actions configured in the neighbouring NE SON function by the NM SON function. This ensures that individual actions taken by the NE SONs remain consistent with each other and maintains overall network integrity. For such inter-NE notifications, available network interfaces 35 can be used (e.g. interface X2 in LTE). For example, when the NE SON function in one cell changes the handover parameter configuration, it notifies the neighbouring cells (for example using an X2 Mobility Settings Change message). The NE SON functions in the neighbouring cells can then make the corresponding handover parameter changes in their own cells, in accordance with the allowed set of parameter combinations, in order to maintain symmetry of handovers.

Note that the method can be applied equally in network architectures where the NE is a central entity that sets the configuration parameters for multiple cells, such as a Radio Network Controller (RNC) in the case of WCDMA. The central entity can execute the coordinated re-configuration according to the NM specified allowable set of parameter combinations, without the need for inter-NE notifications.

The following is an example of an Energy Efficiency SON function implementing the method described above. In this example it is assumed that the NE SON function switches a cell on or off depending on the current load in the cell, and that a neighbouring cell takes over the coverage area of the first cell during the time it is switched off. This requires the neighbouring cell to re-configure its antennas (i.e. to up-tilt its antennas to compensate for the coverage of the first cell). The NE SON switches off a cell with a low current load in order to save energy. The switching off of a cell may actually involve placing the cell into a sleep mode, in which it is inactive and from which it can be reactivated.

However, the required antenna up-tilt cannot be determined by the neighbouring cell alone as it does not have sufficient information about the coverage areas of the cells. But the NM SON function can have this information, based on its collected measurement statistics, cell planning data etc. The NM SON function can specify the following action in the energy efficiency NE SON function of Cell A:
IF the cell (Cell A) is to be switched off, THEN send a notification to CELL B (e.g., via X2 signaling in LTE). In a LTE network this already happens with the sending of a "eNB Configuration Update" X2 message, so the sending of this message does not have to be explicitly configured.

The NM SON function also configures the following actions in CELL B:
IF a switch off signal is received from CELL A, THEN set the antenna tilt to α degrees (i.e. to compensate for lost coverage).

Note that the decision to switch off cell A is still made by the NE SON function, but the coordinated reaction from the neighbor cells (cell B in this example) is guaranteed by the appropriately configured actions of the NE SON function for cell B as specified by the NM SON function.

The following table sets out an allowable set of parameter combinations for the NE SON function, as specified by the NM SON function in a Neighbour Off Tilt attribute sent to the NEs, for this example.

| Attribute | Definition | Allowed Values |
|---|---|---|
| Neighbour Off Tilt Values | Specifies the allowable range of antenna tilt values that should be applied in the cell when a specified neighbouring cell is switched off | Listing pairs of values: Tilt Range & Cell ID List Tilt range is the range of allowable antenna tilt values when neighbouring cells listed in the Cell ID List are switched off |

The NM SON determines an allowed range of tilt values (Tilt Range) for each of the individual cells, which are conditional upon whether or not certain neighbouring cells (identified by the cell IDs in the list) are switched off. In the simplest case, the Cell ID List would contain only a single cell ID, but a list of more cell IDs and Tilt Ranges is required if the tilt value needs to take account of multiple neighbouring cells.

There is no need for any negotiation between the neighbouring cells to set new tilt values in order to compensate for the coverage of cells that are switched off or enter a sleep mode in order to save energy. The NM SON function configures the allowed range of tilt values for each cell from which the NE SON function may autonomously choose when certain neighbouring cells are switched off or enter sleep mode. From the data it has collected, the NM SON function is aware of relative cell coverage areas and so it can set the allowed tilt values such that no coverage hole occurs when any combination of neighbouring cells are switched off or enter sleep mode.

In some cases, instead of a range of tilt values, the NM SON function may provide only a single antenna tilt value in the allowable set of parameters. In such cases the antenna tilt value is fully controlled by the NM SON function. In cases where the NM SON function specifies a range of allowed tilt values, this leaves some freedom for the NE SON functions to select a tilt value.

The use of the attribute at the NE SON function would be as follows.

When a notification is received from a neighbouring cell that it has switched off (for example using the existing X2 signaling message "eNB Configuration Update", which contains the "*Deactivation Indication*" Information Element (IE) in the "*Served Cells to Modify*" IE) the NE SON function selects the new allowed tilt values from the Neighbour Off Tilt Values where the sending cell is included in the Cell ID list (and any other neighbouring cells that are switched off are included in the Cell ID list).

When a notification is received from a neighbouring cell that it is switching back on (e.g. via the existing X2 signaling message "eNodeB Configuration Update" containing the "*Served Cell to Add*" IE in the message), the NE SON function selects the new allowed tilt values from the Neighbour Off Tilt Values, where the sending cell is not included in the Cell ID list (but any other neighbouring cells that are switched off are included in the Cell ID list).

Note that there is no need for any negotiation between the neighbouring cells to select new tilt values to compensate for any coverage hole caused by the energy saving mode of a neighbouring cell. The removal of any requirement to negotiate also removes the occurrence of concurrency or dead-lock situations that can arise when a negotiation between cells cannot be (or takes a long time to be) resolved. Since no negotiation is needed to find the proper value of the given parameter, a cell can react immediately when a cell on/off status indication is received according to the configuration attribute sent by the NM SON function. Each NE SON function executes autonomously the configured antenna tilt parameter reconfiguration for each cell in response to cell on/off notifications received from neighbouring cells.

The following is an example of an Inter-Cell Interference Coordination (ICIC) SON function implementing the method. In the case of ICIC, the NE SON function can decide to switch between certain frequency domain resource allocation strategies when there is interference from neighbouring cells. For example, the NE SON function may decide to switch a cell between reuse-N and reuse-1 resource allocations, or may designate so-called interference protected bands in the frequency domain for users operating close to the cell boundary.

For the interference reduction effect to be realized, the switching between different resource allocation strategies needs to be performed in cooperation with the neighbouring cells. Thus, when one cell designates a protected band or switches from reuse-1 to reuse-N allocation, the neighbouring cell has to take action to refrain from scheduling users in the protected band of the first cell, or, if switching to reuse-N allocation to use only its own part of the frequency band.

As previously discussed, it is difficult or inefficient for the individual cells to negotiate with each other to decide, for example, which cell is using which frequency band when switching to reuse-N allocation. Therefore, in this example, the NM SON function can help the cells to act in a coordinated way by specifying the actions or parameter combinations (i.e. frequency allocations) in the allowable set sent to the NE SON functions.

The NM SON function can specify the following action in the ICIC NE SON function of Cell A:
IF Cell A decides to switch to reuse-N mode THEN Cell A shall start to use Band-1 and send notifications to Cells B, C, D.

The NM SON function also specifies that Cell B performs the following actions (with similar actions specified for Cell C and Cell D):
IF reuse-N signal is received from any of Cells A, C, D THEN restrict the use of resources only to Band-2.

The NM SON function could also specify a Protected Band attribute to designate a range of protected bands that can be used as interference-free bands for the cell.

| Attribute | Definition | Allowed Values |
|---|---|---|
| Protected Band | Specifies a set of interference-free bands that are allowed to be used by the cell as a protected band - i.e. where no high UL interference should be received. This band may be indicated in the "High Interference Indication" IE within the Load Information X2 message when the NE SON wants to reserve a protected band for the cell. | List of allowed frequency bands that may be used as protected frequency bands (PRB*s) - typically consecutive PRBs - for the cell. |

| | | |
|---|---|---|
| * PRB stands for Physical Resource Block, which is a frequency unit in a given time instance. The list of frequency bands is actually a list of physical resource blocks (numbered from 1 to N). | | |

The NM SON function can determine the Protected Band attributes for the neighbouring cells in a coordinated way, e.g. in accordance with a frequency plan. The attribute can then be used by the NE SON in the following way.

When a need arises to obtain an interference free band for a cell (e.g., determined based on current interference, traffic situations, amount of cell-edge users, etc.,), the cell sends a message (e.g. a Load Information X2 message, developed for ICIC purposes) to the neighbouring cells, indicating the Protected Band attribute as the *UL High Interference Indication* IE in the X2 message. (Note that the *UL High Interference Indication* IE is used as the indication of bands having a high interference sensitivity of the sending cell - this is described in more detail in 3GPP TS 36.423 - X2 Application Protocol).

When a cell has received a Load Information message with the UL High Interference Indication IE included, it will avoid scheduling users, especially users operating near the cell boundary, on the indicated band. (Note this behaviour is already specified in 3GPP TS 36.423.)

The advantages of using the NM SON function to specify the protected bands for the cells is that it avoids situations where more than one neighbouring cell tries to select the same protected band. Otherwise, resolving such cases would require complicated inter-cell negotiations, which could have a knock-on effect to other parts of the network (as is known to occur from general studies of frequency planning) and would be difficult to implement in a distributed NE SON function. By relying on the NM SON function's knowledge (e.g. knowledge of a frequency plan for the network) the protected bands of the cells can be determined in a way that prevents inter-cell conflicts. Whether and when a cell wants to make use of its protected band can be dynamically determined at the local cell level by the NE SON algorithms resulting in a fast implementation. Also the method employed avoids any dead-lock problems, as the NE SON functions can autonomously decide when to utilise a protected band for a cell without any risk that doing so will collide with the protected band of any of the neighbouring cells.

The following is an example of a Load Dependent Antenna Tilting SON function implementing the method. In this example it is assumed that the NE SON function can change the antenna configurations of the cells in a semi-dynamic way, depending on the actual load in a cell and in neighbouring cells. For example, this function may be used to balance loads in the cells or to optimise signal-to-interference-and-noise ratios (SINRs) in the cells. The load balancing actions can be executed in the NE SON function by changing antenna configurations (e.g., changing tilt) and may operate on a time scale shorter than that of a typical NM SON load balancing function, but longer than, for example, a handover-based load balancing function.

The load based SINR optimization functions, may be configured to tilt the antenna in a cell upwards in low load situations in order to increase the cell signal strength, and to tilt the antenna downwards in a high load situation where interference limits performance. In either case, the change of antenna tilt has to be coordinated with neighbouring cells in order to avoid coverage holes or sub-optimal configurations. The NM SON function can determine allowable combinations of neighbouring cell antenna parameters, from which the NE SON functions can select dynamically, depending on the actual local conditions in the cells.

The NM SON function can specify the following action in the NE SON Load Balancing function for Cell A:
IF the load < load_1 in Cell A THEN set antenna tilt of Cell A to α degrees and notify Cell B.

The NM SON function can specify the following action in Cell B:
IF uptilt notification is received from Cell A AND load in Cell B < load_2 THEN accept Cell A tilt change AND set antenna tilt of Cell B to β degrees ELSE reject notification from Cell A.

As a result of these specified allowable parameter combinations, neighbouring cells A and B will tilt their antennas upwards when there is low load in both cells, i.e. to increase their signal strengths and SINRs while there is no interference problem.

The attribute sent by the NM SOM function over Itf-N interface may be as follows.

| Attribute | Definition | Allowed Values |
|---|---|---|
| Tilt Value Combinations | Specifies the allowable range of tilt values that should be applied in the cell when specified neighbour cells have given tilt values. | Lists of three values: Tilt Range; Tilt of Neighbours; Cell IDs. Tilt Range specifies the range of allowed tilt values in the cell when neighbouring cells identified by the Cell IDs have tilt values given by the corresponding Tilt of Neighbours values |

The NE SON function is configured to interpret the Tilt Value Combinations attribute and to act accordingly as follows.

When the NE associated with a cell receives an indication of a tilt value change from one of the neighbouring cells, the NE SON function selects a tilt value for the associated cell falling within the allowable Tilt Range for the cell where the Tilt of Neighbours values (listed for each of the neighbouring Cell IDs) match the current tilt values of the neighbour cells given in the received indication message. Then the NE SON function adjusts the tilt of the antenna of the associated cell using the selected tilt value.

When the NE SON Function wishes to change the antenna tilt value of an associated cell (e.g., determined from a cell level load balancing algorithm) it sends a tilt change indication message to the NEs associated with the neighbouring cells, specifying the new tilt value. The NE SON functions that control the neighbouring cell antennas can adjust the tilt settings in those cells accordingly.

For an LTE network, the NE (eNodeB) can make use of the already available "eNodeB Configuration Update" message sent over the X2 interface as the indication message used to send information to neighbouring cells of the tilt value change in a cell, although a new IE needs to be added to convey the changed antenna tilt value of the cell.

Figure 4 is a block diagram showing the principal functional components of a NM entity 40, including a NM SON functionality as described above. The NM 40 includes an input/output 41 for receiving and sending signals and data to/from other entities in the network. The input/output 41 includes an Itf-N interface over which messages can be sent to NEs that have the NE SON functionality. A memory 42 stores data and programming instructions. A processor 43 executes the programming instructions. This includes implementing the NM SON function 44. The NM SON function 44 includes a Network condition evaluator 45, which obtains operational data relating to the network and evaluates a current network condition based on the operational data. The NM SON function 44 also includes a NE SON parameter setting function 46, which, based on the current network condition, determines an allowable set of combinations of NE configuration parameter settings. The allowable set defines combinations of NE configuration parameters that a NE is permitted to use when reconfiguring an associated cell. The NM 40 provides the allowable set to the NEs over the Itf-N interface in the input/output 41.

The NM SON 44 may also determine a set of specific actions based on the current network condition and provide the NEs with the specific action set. A specific action causes an NE to perform a specified reconfiguration action in response to a change in network conditions. The specific actions and associated allowable combinations of parameter settings are provided to the NEs in an attribute sent over the Itf-N interface.

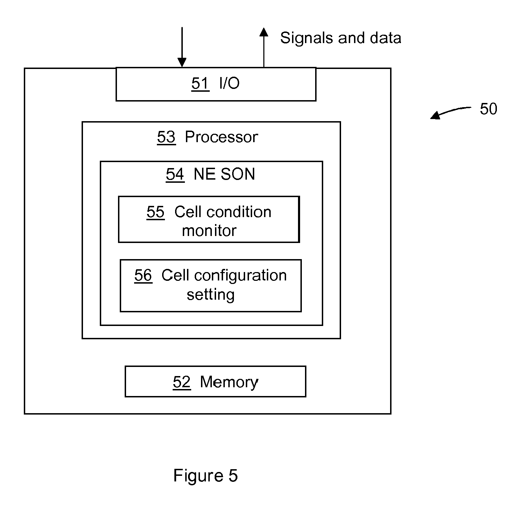

Figure 5 is a block diagram showing the principal functional components of a NE 50 of a NE SON functionality as described above, and is an entity in a cellular telecommunications network that also includes a NM. The NE 50 includes an input/output 51 for receiving and sending signals and data to/from other entities in the network. A memory 52 stores data and programming instructions. A processor 53 executes the programming instructions, including implementing a NE SON function 54. The NE 50 stores, in the memory 52, an allowable set of combinations of cell configuration parameters received from the NM. The NE SON function 54 includes a cell condition monitor 55, which monitors network conditions related to the one or more associated cells. The NE SON function 54 also includes a cell configuration setting function 56, which, in response to changes in the monitored network conditions, reconfigures a cell using cell configuration parameters in accordance with the allowable set.

The method and cellular network entities described above advantageously combine the benefits of distributed and centralized SON functions, such that fast decisions are still performed by the distributed, NE SON functions, while the multi-cell coordination of actions is controlled from the NM SON function. In particular, the benefits of rapid response times associated with NEs are combined with the benefits of inter-cell decision making by the NM SON function.

## Claims

1. A method of operating a cellular telecommunications network to implement a self-organising network, SON, functionality that includes a network manager, NM, SON function (31) implemented in a network manager, NM (12), and a plurality of network elements, NEs (16), each having a NE SON function (33, 34) implemented therein, wherein each NE SON function is associated with one or more network cells, the method comprising the NM SON function:
obtaining (21) operational data relating to the network;
evaluating (21) a current network condition based on the operational data;
based on the current network condition, determining (22) an allowable set of configuration parameters, wherein the allowable set defines combinations of cell configuration parameters that a NE SON function is permitted to use when reconfiguring an associated cell; and
providing (23) the allowable set in a NE configuration attribute sent to the NE SON function.

2. The method of claim 1 wherein the NM SON function (31) also determines and provides the NEs (16) with a set of specific actions based on the current network condition in the configuration attribute, wherein a specific action causes an NE to perform a specified reconfiguration action (24) in response to a change in network conditions.

3. The method of claim 1 or claim 2 wherein the attribute is provided to the NEs (16) from the NM SON function (31) over an Itf-N interface (13).

4. A method of operating a cellular telecommunications network to implement a self-organising network, SON, functionality that includes a network manager, NM, SON function (31) implemented in a network manager, NM (12), and a plurality of network element, NEs (16) functions each having a NE SON function (33, 34) implemented therein, wherein each NE SON function is associated with one or more network cells, the method comprising a NE SON function:
receiving (23) from the NM SON function an NE configuration attribute defining combinations of cell configuration parameters that the NE SON function is permitted to use when reconfiguring an associated cell;
monitoring network conditions that relate to the associated cell; and
in response to changes in the monitored network conditions, reconfiguring (24) the associated cell using cell configuration parameters in accordance with the received configuration attribute.

5. The method of claim 4 wherein the configuration attribute received from the NM SON function (31) includes a set of specific actions and the NE SON function (33, 34) performs a reconfiguration action specified in the set of specific actions in response to a change in the monitored network conditions.

6. The method of any preceding claim, wherein the cell configuration parameters include an antenna tilt parameter and the NE configuration attribute defines a set of antenna tilt values to be used depending on whether one or more neighbouring cells are active or inactive.

7. The method of claim 6, wherein the NE configuration attribute is a Neighbour Off Tilt Values attribute specifying the allowable range of antenna tilt values that should be applied in the cell when a specified neighbouring cell is switched off, the attribute including a listing of pairs of values of Tilt Range and Cell ID List, wherein the Cell ID List is a list of neighbouring cells and Tilt Range specifies the range of allowable antenna tilt values when the neighbouring cells listed in the Cell ID List, are inactive.

8. The method of claim 7, wherein when a NE receives a notification from a neighbouring cell that it has become inactive the NE SON function selects the new allowed tilt values from the Neighbour Off Tilt Values where the neighbouring cell is included in the Cell ID list together with any other neighbouring cells that are inactive.

9. The method of claim 8 wherein when the NE receives a notification from the neighbouring cell that it is becoming active, the NE SON function selects the new allowed tilt values from the Neighbour Off Tilt Values, where the neighbouring cell is not included in the Cell ID list, but any other neighbouring cells that are inactive are included in the Cell ID list.

10. The method of any of claims 1 to 5, wherein the NE configuration attribute includes a frequency domain resource allocation parameter, and a set of specific actions that includes an instruction for the NE (16) to set the frequency domain resource allocation parameter to a specified frequency band when the NE detects interference from neighbouring cells.

11. The method of claim 10 wherein the NE configuration attribute is a Protected Band attribute specifying a set of interference-free bands that are allowed to be used by a cell as a protected band, wherein the attribute includes a listing of allowed frequency bands that may be used as protected frequency bands for the cell, and wherein the NE (16) reserves the protected band for the cell by means of an indication in a Load Information message sent over an X2 interface (35).

12. The method of claim 11 wherein when a need arises to obtain an interference free band for a cell, the NE associated with the cell sends the Load Information message to NEs associated with the neighbouring cells over the X2 interface, the Load Information Message indicating the Protected Band attribute.

13. The method of claim 13 wherein when a neighbouring cell has received a Load Information message, it avoids scheduling users on the indicated band.

14. The method of any of claims 1 to 5 wherein the cell configuration parameters include a load-dependent antenna tilt parameter, and the NE configuration attribute defines values of the load-dependent antenna tilt parameter that the NE (16) can use depending on values of antenna tilt parameters being used in neighbouring cells.

15. The method of claim 14, wherein the NE configuration attribute is a Tilt Value Combinations attribute specifying the allowable range of tilt values that should be applied in the cell when specified neighbour cells have given tilt values, the attribute including a listing of values of: Tilt Range; Tilt of Neighbours; and Cell IDs, wherein Tilt Range specifies the range of allowed tilt values in the cell when neighbouring cells identified by the Cell IDs have tilt values given by the corresponding Tilt of Neighbours values.

16. The method of claim 15 wherein when the NE associated with a cell receives an indication of a tilt value change from one of the neighbouring cells, the NE SON function selects a tilt value for the associated cell falling within the allowable Tilt Range for the cell where the Tilt of Neighbours values listed for each of the neighbouring Cell IDs match the current tilt values of the neighbour cells given in the received indication message, and the NE SON function adjusts the tilt of the antenna of the associated cell using the selected tilt value.

17. The method of claim 15 or claim 16, wherein when an NE SON Function wishes to change the antenna tilt value of an associated cell it sends an indication of a tilt value change in a message to the NEs associated with the neighbouring cells, specifying the new tilt value.

18. A network manager, NM (12; 40), of a cellular telecommunications network that also includes a plurality of network elements, NEs (16), wherein each NE is associated with one or more network cells, the NM comprising:
an input/output (41) for receiving and sending signals and data to/from other entities in the network;
a memory (42) storing data and programming instructions; and
a processor (43) executing the programming instructions, including instructions for implementing a self-organising network, SON, function, which configures the NM to:
obtain operational data relating to the network;
evaluate a current network condition based on the operational data;
based on the current network condition, determine an allowable set of combinations of configuration parameter settings, wherein the allowable set defines combinations of cell configuration parameters that a NE is permitted to use when reconfiguring an associated cell; and
providing the allowable set in a NE configuration attribute sent to the NEs.

19. The NM of claim 18 wherein the SON also configures the NM to determine a set of specific actions based on the network condition and provide the NEs with the specific action set in the configuration attribute, wherein a specific action causes an NE to perform a specified reconfiguration action in response to a change in network conditions.

20. A network element, NE, of a cellular telecommunications network that also includes a network manager, NM, wherein the NE is associated with one or more network cells, the NE comprising:
an input/output for receiving and sending signals and data to/from other entities in the network;
a memory storing data and programming instructions; and
a processor executing the programming instructions, including a self-organising network, SON, which configures the NE to:
store in the memory an allowable set of combinations of cell configuration parameters received from the NM in a NE configuration attribute;
monitor network conditions related to the one or more associated cells; and
in response to changes in the monitored network conditions, reconfigure a cell using cell configuration parameters in accordance with the NE configuration attribute.
